**Europäisches Patentamt**

**European Patent Office**

**Office européen des brevets**

(19)

(11) Veröffentlichungsnummer : **0 168 516
B1**

(12) **EUROPÄISCHE PATENTSCHRIFT**

(45) Veröffentlichungstag der Patentschrift :
28.09.88

(51) Int. Cl.⁴ : **A 01 F 12/40**

(21) Anmeldenummer : 84108528.5

(22) Anmeldetag : 19.07.84

(54) Häckselvorrichtung, insbesondere für Erntebergungsmaschinen.

(43) Veröffentlichungstag der Anmeldung :
22.01.86 Patentblatt 86/04

(45) Bekanntmachung des Hinweises auf die Patenterteilung : 28.09.88 Patentblatt 88/39

(84) Benannte Vertragsstaaten :
DE FR GB

(56) Entgegenhaltungen :
DE-A- 2 436 308
DE-B- 1 178 632
JOHN DEERE ERSATZTEILKATALOG, PC-4156(4-77)

(73) Patentinhaber : DEERE & COMPANY
1 John Deere Road
Moline Illinois 61265 (US)

(72) Erfinder : Kunde, Detlev, Dipl.-Ing.
Tempelhoferstrasse 11
D-6650 Homburg (DE)

(74) Vertreter : Feldmann, Bernhard et al
DEERE & COMPANY European Office, Patent Department Steubenstrasse 36-42 Postfach 503
D-6800 Mannheim 1 (DE)

## Beschreibung

Die Erfindung bezieht sich auf eine Häckselvorrichtung, insbesondere für Erntebergungsmaschinen, mit einem rotierenden Häckselwerk und über eine Stellvorrichtung in ihrer Lage veränderbaren Gegenmessern, die in einer Halterung aufgenommen und mittels endseitig an der Halterung angeordneter Zapfen in im Gehäuse der Häckselvorrichtung vorgesehene Langlochöffnungen verstellbar sind.

Es ist bereits eine Häckselvorrichtung der eingangs aufgeführten Art bekannt (John Deere Ersatzteilkatalog PC-4156, 4-77), die am hinteren Ende eines Mähdreschers angeordnet und mit einem Häckselwerk und mit diesem zusammenwirkenden Gegenmessern ausgerüstet ist, die in einer im Gehäuse der Häckselvorrichtung angeordneten Halterung aufgenommen sind. Die Halterung ist endseitig über Bolzen und eine in den Seitenwänden vorgesehene Langlochöffnung mit den Seitenwänden des Gehäuses verbunden und weist jeweils endseitig einen Hebelarm auf, der zur Verschwenkung der Halterung und somit aller Gegenmesser dient. Durch Verschwenken der Messer gelangen die Messer zwar aus der Bewegungsbahn der Messer der Häckselvorrichtung. Gleichzeitig wird jedoch durch den zugehörigen Hebel der Ein- bzw. der Ausbau der Siebe bei ein- und ausgeschwenkten Gegenmessern behindert. Durch Verschwenken der Messer wird gleichzeitig auch die Lage der Messer mit Bezug auf die einzelnen Messer des Häckselwerkes verändert, so daß auch hierdurch eine Wirkungsgradverschlechterung auftritt.

Der Erfindung liegt die Aufgabe zugrunde, die Gegenmesser und die zugehörige Halterung derart auszubilden und anzuordnen, daß bei einer Verstellung der Halterung der einzelnen Gegenmesser der Einstellwinkel zwischen ihnen und dem Messer des Häckselwerkes nicht verändert wird. Diese Aufgabe ist dadurch gelöst worden, daß die Stellvorrichtung jeweils eine zweite quer zu der jeweils ersten im Gehäuse der Häckselvorrichtung vorgesehenen Langlochöffnung angeordnete Langlochöffnung zur Zwangsführung des entsprechenden Zapfens der Halterung aufweist und die Zapfen durch die Stellvorrichtung verschiebbar sind. Da die Halterung in einer zweiten Langlochöffnung verschiebbar aufgenommen ist und über die Stellvorrichtung geführt wird, läßt sich die Halterung in einer geneigt verlaufenden Ebene verstellen, ohne daß dabei der Einstellwinkel der Messer mit Bezug auf die Messer des Häckselwerkes verändert wird. Somit ist eine bessere Anpassung der Gegenmesser an das Häckselwerk möglich, ohne daß bei einer Verstellung der Gegenmesser eine Wirkungsgradverschlechterung auftritt. Durch die in der Stellvorrichtung vorgesehene zweite Langlochöffnung erhält man außerdem auf einfache Weise eine Zwangführung für die an der Halterung vorgesehenen Zapfen und somit eine gute Verstellmöglichkeit für alle Messer. In weiterer Ausgestaltung der Erfindung ist es vorteilhaft, daß die Stellvorrichtung als Hebel ausgebildet ist, der über seine Langlochöffnung hinaus beiderseits verlängert ist, wobei der eine Teil am Gehäuse schwenkbar gelagert ist und der andere Teil einen Handgriff trägt, und daß die jeweils endseitig an der Halterung vorgesehenen Zapfen jeweils in einem an der Außenseite des Gehäuses der Häckselvorrichtung schwenkbar gelagerten Hebel verschiebbar aufgenommen sind, wobei die Hebel an ihren freien Enden über den Handgriff miteinander verbunden sind. Da der Hebel an seinem oberen Ende im Gehäuse verschwenkbar gelagert ist und sich dieser über die Langlochöffnung nach unten erstreckt, erhält man einen großen Stellweg für die Halterung der Gegenmesser, so daß der Hebel nicht sehr weit nach oben verschwenkt zu werden braucht, um eine vollständige Verstellung der Messer nach hinten herbeizuführen. Durch die endseitige Verbindung der Hebel über ein Gestänge bzw. einen Handgriff lassen sich beide Hebel ohne großen Kraftaufwand verschwenken und somit eine Parallelverstellung der Halterung herbeiführen, ohne daß ein Kanten der Halterung in den Langlochöffnungen zu befürchten ist.

Sollen die einzelnen Messer und nicht die Halterung verstellt werden, so ist es in weiterer Ausgestaltung der Erfindung vorteilhaft, daß diese in in der Halterung vorgesehenen Schlitzöffnungen verschiebbar gelagert und endseitig über ein in dem Hebelarm geführtes Gestänge miteinander verbunden sind. Einen relativ großen Stellweg erhält man dadurch, daß der Abstand zwischen dem Handgriff und der geneigt verlaufenden Langlochöffnung zur Aufnahme der an der Halterung vorgesehenen Zapfen kleiner ist als der Abstand zwischen dieser Langlochöffnung und der Anlenkstelle des am Gehäuse gelagerten Hebels.

Im folgenden wird die Erfindung anhand von einen Ausführungsweg darstellenden Zeichnungen näher erläutert. Es zeigt:

Fig. 1 eine Seitenansicht einer Stellvorrichtung für die Gegenmesser eine Häckselvorrichtung,

Fig. 2 eine perspektivische Darstellung der in einer Halterung aufgenommenen Gegenmesser, die über die Stellvorrichtung in einer geneigt verlaufenden Ebene verschoben werden können.

In der Zeichnung ist mit 10 eine Häckselvorrichtung bezeichnet, die in einer Erntebergungsmaschine bzw. am Ende eines der Einfachheit halber in der Zeichnung nicht dargestellten Mähdreschers angebaut werden kann. Die Häckselvorrichtung weist ein in einem in der Zeichnung nicht dargestellten Gehäuse angeordnetes Häckselwerk 12 auf, das mit einer horizontal verlaufenden Achse 14 ausgerüstet ist, die endseitig in den Seitenwänden des Gehäuses drehbar aufgenommen ist. An der Achse 14 lagern zahlreiche pendelnd gelagerte Messer, die sich bei einer bestimmten Drehgeschwindigkeit der Häckselvorrichtung radial ausrichten. Im Bereich des Außenumfanges des Häckselwerkes 12 befinden sich zahlreiche Gegenmesser 16, die in entsprechenden in einer Halterung 18 vorgesehenen vertikalen Schlitzen 19 aufgenommen und endseitig über ein Gestänge 20 verbunden sind. Das Gestänge 20 ist endseitig in an der Halterung 18 vorgesehenen Flanschen 22 und in einem an der Halterung 18 vorgesehenen mittleren Flansch 24 gesichert, damit sich die einzelnen Gegenmesser 16 in den in der Halterung vorgesehenen Schlitzen 19 nicht verschieben können. Am äußeren Ende der Halterung 18 ist je ein Zapfen 26 fest angeordnet, der in einer geneigt verlaufenden Langlochöffnung 28 verschiebbar aufgenommen ist. Die entsprechenden Langlochöffnungen 28 sind in nur teilweise dargestellten Seitenwänden 29 des Gehäuses der Häckselvorrichtung 10 angeordnet. Beiderseits der Halterung 18 befindet sich je ein Hebel 30, der an seinem oberen Ende über einen Schraubenbolzen 31 an die Seitenwand 29 des Gehäuses schwenkbar angeschlossen ist. Zwischen dem Schraubenkopf des Schraubenbolzens 31 und dem Hebel 30 können eine Unterlagscheibe 32 und ein Federring 33 angeordnet sein. Ein jeder Hebel 30 weist vorzugsweise im Bereich seines unteren Endes eine sich in Längsrichtung des Hebels 30 erstreckende Langlochöffnung 34 auf, die sich quer zu der in der Seitenwand 29 des Gehäuses vorgesehenen Langlochöffnung 28 erstreckt und die ebenfalls zur Aufnahme des entsprechenden an der Halterung 18 vorgesehenen Zapfens 26 dient. Die beiden Hebel 30 sind an ihrem unteren der Gelenkstelle gegenüberliegenden Ende über ein Gestänge bzw. einen Handgriff 36 miteinander verbunden, so daß beide Hebel 30 gleichzeitig verstellt werden können und somit die Zapfen 26 in den Langlochöffnungen 34 und ferner in den Langlochöffnungen 28 zwangsgeführt sind.

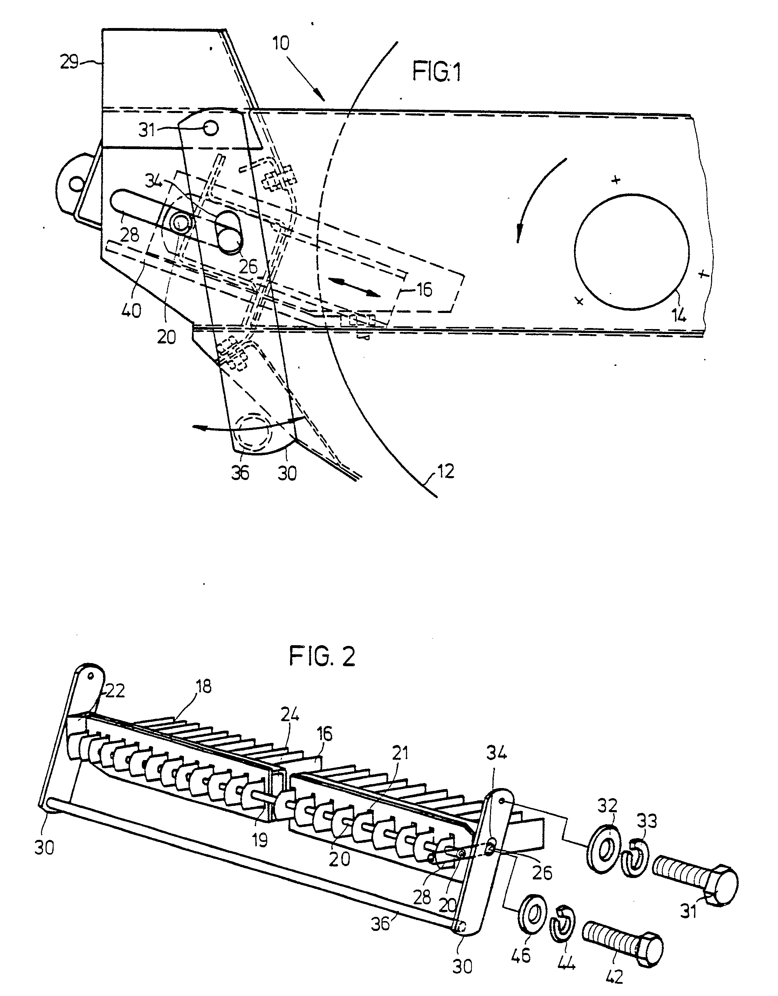

Wie aus Fig. 1 hervorgeht, ist seitlich an der Halterung 18, an jeder Seitenwand 29 des Häckslers unterhalb der geneigt verlaufend angeordneten Gegenmesser 16 ein Flachstahl 40 angeordnet, der als Führung der Gegenmesser 16 bzw. der Halterung 18 dient.

Befindet sich die Häckselvorrichtung im Arbeitseinsatz, so nehmen die Gegenmesser 16 normalerweise die in Fig. 1 dargestellte vordere Lage ein und wirken mit den am Häckselwerk 12 angeordneten Messern zusammen. Je nach Beschaffenheit des Erntegutes oder dem gewünschten Grad der Zerkleinerung des Erntegutes können die Gegenmesser 16 weiter in Richtung der Achse 14 des Häckselwerkes 12 oder entgegengesetzt dazu in einer geneigt verlaufenden Ebene verstellt werden. Hierzu kann die Bedienungsperson über den Handgriff 36 die beiden Hebel 30 mit Bezug auf Fig. 1 im Uhrzeigerdrehsinn etwas verschwenken und dabei in eine rückwärtige Stellung bringen. Da die Zapfen in den Langlochöffnungen 28 verschiebbar aufgenommen sind, die die gleiche Neigung wie die Längsmittelachse der einzelnen Gegenmesser 16 aufweisen, wird bei einer Verschwenkung der beiden Hebel 30 die horizontale Lage der Gegenmesser 16 und somit der Einstellwinkel mit Bezug auf die Messer der Häckselvorrichtung 10 nicht verändert. Dadurch erhält man auch bei einer Verstellung der Gegenmesser 16 eine gute Schneidwirkung. Soll beispielsweise die Häckselvorrichtung 10 bei der Maisernte eingesetzt werden, so ist es vorteilhaft, daß die Gegenmesser 16 ganz aus dem Rotationskreis des Häckselwerkes 12 heraus verstellt werden, so daß eine Zerkleinerung der Maisspindeln (Maiskolben ohne Maiskörner) lediglich mit dem Häckselwerk 12 durchgeführt wird. Auch bei einer Verstellung der Gegenmesser 16 in diese Lage gelangen die beiden Hebel nicht in den Auslaufbereich des Hordenschüttlers bzw. der einzelnen Siebe, da durch Verlagerung der Langlochöffnung 28 in den unteren Bereich des Hebels 30 bzw. in den Bereich des Gestänges 36 ein großer Stellweg für die Halterung 18 geschaffen wird, so daß die beiden Hebel 30 mit ihren beiden Enden nach unten ausgerichtet sind (siehe Fig. 1).

Sollen beispielsweise lediglich die Messer über die Hebel 30 verstellt werden, so kann auch das Gestänge 20 zur Verbindung der einzelnen Gegenmesser 16 mit den Hebeln 30 verbunden werden, so daß nicht die Halterung 18, sondern die einzelnen Gegenmesser 16 in den Schlitzöffnungen 21 verstellt werden. Bei einer derartigen Verstellung darf jedoch das Gestänge 20 nicht in den Flanschen 22 und 24 aufgenommen werden. Im Ausführungsbeispiel ist jedoch das Gestänge in den Flanschen 22 und 24 unverstellbar aufgenommen. Die entsprechenden Zapfen 26 der Halterung 18 sind über Schraubenbolzen 42 gesichert, auf denen je ein Federring 44 und eine Unterlagscheibe 46 angeordnet sein können.

## Patentansprüche

1. Häckselvorrichtung (10), insbesondere für Erntebergungsmaschinen, mit einem rotierenden Häckselwerk (12) und über eine Stellvorrichtung in ihrer Lage veränderbaren Gegenmessern (16), die in einer Halterung (18) aufgenommen und mittels endseitig an der Halterung (18) angeordneter Zapfen (26) in im Gehäuse der Häckselvorrichtung vorgesehene Langlochöffnungen (28) verstellbar sind, dadurch gekennzeichnet, daß die Stellvorrichtung jeweils eine zweite quer zu der jeweils ersten im Gehäuse der Häckselvorrichtung (10) vorgesehenen Langlochöffnung (28) angeordnete Langlochöffnung (34) zur Zwangsführung des entsprechenden Zapfens (26) der Halterung (18) aufweist und die Zapfen (26) durch die Stellvorrichtung verschiebbar sind.

2. Vorrichtung nach Anspruch 1, dadurch gekennzeichnet, daß die Stellvorrichtung als Hebel (30) ausgebildet ist, der über seine Langlochöffnung (34) hinaus beiderseits verlängert ist, wobei der eine Teil am Gehäuse schwenkbar gelagert ist und der andere Teil einen Handgriff (36) trägt.

3. Vorrichtung nach Anspruch 1 oder 2, dadurch gekennzeichnet, daß die jeweils endseitig an der Halterung (18) vorgesehenen Zapfen (26) jeweils in einem an der Außenseite des Gehäuses der Häckselvorrichtung (10) schwenkbar gelagerten Hebel (30) verschiebbar aufgenommen sind, wobei die Hebel an ihren freien Enden über den Handgriff (36) miteinander verbunden sind.

4. Vorrichtung nach einem oder mehreren der vorhergehenden Ansprüche, dadurch gekennzeichnet, daß die einzelnen Gegenmesser (16) in in der Halterung (18) vorgesehenen Schlitzöffnungen (21) verschiebbar gelagert und endseitig über ein in dem Hebelarm (30) geführtes Gestänge (20) miteinander verbunden sind.

5. Vorrichtung nach einem oder mehreren der vorhergehenden Ansprüche, dadurch gekennzeichnet, daß der Abstand zwischen dem Handgriff (36) und der geneigt verlaufenden Langlochöffnung (28) zur Aufnahme der an der Halterung vorgesehenen Zapfen (26) kleiner ist als der Abstand zwischen dieser Langlochöffnung und der Anlenkstelle des am Gehäuse gelagerten Hebels (30).

### Claims

1. Chopper device (10), especially for harvesting machines, with a rotating chopper mechanism (12) and counter-knives (16) adjustable in their position by a positioning device, which are received in a holder (18) and are adjustable by means of lugs (26) arranged at the ends of the holder (18) in slot openings (28) provided in the housing of the chopper device, characterized in that the positioning device has in each case a second slot opening (34) arranged transverse to the respective first slot opening (28) provided in the housing of the chopper device (10), for controlled guiding of the corresponding lug (26) of the holder (18), and the lugs (26) are displaceable by the positioning device.

2. Device according to claim 1, characterized in that the adjusting device is formed as a lever (30) which extends beyond its slot opening (34) on both sides, one part being pivotally mounted on the housing and the other part carrying a handle (36).

3. Device according to claim 1 or 2, characterized in that the lugs (26) which are provided at the end of the holder (18) are each displaceably received in a lever (30) pivotally mounted on the outside of the housing of the chopper device (10), the levers being connected together at their free ends by way of the handles (36).

4. Device according to one or more of the preceding claims, characterized in that the individual counter-knives (16) are displaceably mounted in slot openings (21) provided in the holder (18) and are connected to each other at their ends by means of a rod (20) guided in the lever arm (30).

5. Device according to one or more of the preceding claims, characterized in that the spacing between the handle (36) and the inclined slot opening (28) for receiving the lugs (26) provided on the holder is smaller than the spacing between this slot opening and the pivot of the lever (30) mounted on the housing.

### Revendications

1. Dispositif de hachage (10), en particulier pour des moissonneuses, comportant un mécanisme hacheur rotatif (12) et des contre-lames (16) dont la position peut être modifiée au moyen d'un dispositif de réglage, qui sont reçues dans un support (18) et peuvent être déplacées dans des ouvertures oblongues (28) prévues dans le carter du dispositif de hachage au moyen de chevilles (26) placées à l'extrémité sur le support (18), caractérisé en ce que le dispositif de réglage comporte chaque fois une seconde fente oblongue (34) disposée transversalement à la première ouverture oblongue (28) prévue dans le carter du dispositif de hachage (10), pour le guidage forcé de la cheville (26) correspondante du support (18), et en ce que les chevilles (26) peuvent être déplacées par le dispositif de réglage.

2. Dispositif suivant la revendication 1, caractérisé en ce que le dispositif de réglage est réalisé sous la forme d'un levier (30) qui est prolongé des deux côtés au-delà de son ouverture oblongue (34), une première partie étant placée de façon à pouvoir pivoter sur le carter et la seconde partie comportant une poignée (36).

3. Dispositif suivant la revendication 1 ou 2, caractérisé en ce que les chevilles (26) prévues chacune à l'extrémité sur le support (18) sont reçues chacune de façon à pouvoir se déplacer dans un levier (30) placé de façon à pouvoir pivoter sur la face extérieure du carter du dispositif de hachage (10), les leviers étant reliés entre eux par la poignée (36) à leurs extrémités libres.

4. Dispositif suivant une ou plusieurs des revendications précédentes, caractérisé en ce que les contre-lames (16) individuelles sont placées de façon à pouvoir se déplacer dans des ouvertures en forme de fentes (21) prévues dans le support (18) et sont reliées entre elles à leurs extrémités par l'intermédiaire d'une tringle (20) guidée dans le bras de levier (30).

5. Dispositif suivant une ou plusieurs des revendications précédentes, caractérisé en ce que la distance entre la poignée (36) et l'ouverture oblongue (28) de direction inclinée pour la réception de chevilles (26) prévues sur le support est inférieure à la distance entre cette ouverture oblongue et le point d'articulation du levier (30) placé sur le carter.

**FIG.1**

**FIG. 2**